Europäisches Patentamt

European Patent Office

Office européen des brevets

(19)

(11) Veröffentlichungsnummer: **0 020 790**
**B1**

(12)                           EUROPÄISCHE PATENTSCHRIFT

(45) Veröffentlichungstag der Patentschrift: 16.06.82

(21) Anmeldenummer: 79101807.0

(22) Anmeldetag: 07.06.79

(51) Int. Cl.³: **F 16 F 1/38**

(54) Gelenkbuchse.

(43) Veröffentlichungstag der Anmeldung:
07.01.81 Patentblatt 81/1

(45) Bekanntmachung des Hinweises auf die Patenterteilung:
16.06.82 Patentblatt 82/24

(84) Benannte Vertragsstaaten:
DE FR GB IT

(56) Entgegenhaltungen:
AT - A - 343 492
DE - A - 1 955 308
FR - A - 2 335 744
GB - A - 1 361 484

(73) Patentinhaber: **Jörn GmbH**
**Porsche Strasse 10**
**D-7012 Fellbach (DE)**

(72) Erfinder: **Jörn, Raoul, Dipl.-Ing.**
**D-8992 Hengnau/Post Wasserburg a.B. (DE)**
Erfinder: **Bürgler, Karl-Heinz, Dipl.-Ing.**
**D-7000 Stuttgart 80 (DE)**

(74) Vertreter: **Eyer, Eckhardt Philipp, Dipl.-Ing. et al,**
**Patentanwälte Dipl.-Ing. E. Eyer, H. Linser Robert-**
**Bosch-Strasse 12a**
**D-6072 Dreieich (DE)**

## Gelenkbuchse

Die Erfindung betrifft eine Gelenkbuchse zur Aufnahme in einem Aufnahmeauge, bestehend aus einem Außenrohr und einem Innenrohr sowie gegebenenfalls einem Zwischenrohr mit jeweils einer zwischen den Rohren einvulkanisierten Gummischicht, die in unmontiertem Zustand einen das Aufnahmeauge übersteigenden Außendurchmesser aufweist und mindestens einen sich in radialer Richtung bis zum Innenrohr erstreckenden in einem radialen Querschnitt im wesentlichen keil- oder bogenförmigen Längsschlitz besitzt.

Bei einer bekannten Gelenkbuchse dieser Art mit geteiltem Innen-und Außenrohr (DE—A—1955308) erstrecken sich Längsschlitze über die gesamte Buchsenlänge, wobei die Flanken der Schlitze auf ihrer gesamten Länge einen geradlinigen Verlauf nehmen, d.h. die Längsschlitze auf ihrer gesamten Länge einen gleichen Querschnitt aufweisen. Bei der Montage in das einen kleineren Durchmesser aufweisende Aufnahmeauge wird die Buchse unter Vorspannung und weitgehender Schließung der im Gummi und dem Metallteil ausgebildeten Schlitze zusammengedrückt, so daß nach der Montage der zusammengedrückte Gummi das Außenrohr an das Aufnahmeauge andrückt. Hierbei kann das Außenrohr außen zum Zwecke der Erhöhung der Reibungszahl mit einem Gummifilm überzogen sin. Die in dieser Weise ausgebildeten Gelenkbuchsen haben sich insofern gut bewährt, als sie insbesondere bei Ausbildung mit nur einem Längsschlitz in sehr einfacher und damit wirtschaftlicher Weise herstellbar sind, da das Außenrohr durch einfaches Rollen aus einen einzigen Blech hergestellt werden kann. Unbefriedigend ist jedoch ihr Federverhalten insofern, als sich die Federkennung auf dem Buchsenumfang in Richtung auf den Schlitz stark verändert dahingehend, daß die Buchse in den um den Spaltliegenden Bereichen sehr viel nachgiebiger als in den Bereichen der nicht unterbrochenen Gummischichten ist. So ist beispielsweise bei einer mit einem Schlitz versehenen Buchse üblicher Größe die radiale Federkonstante in der Schlitzebene etwa 20% geringer als in den anderen Radialebenen, wobei die Abweichung bei Buchsen mit sehr dunnen Gummischichten größer als bei Buchsen mit großen Gummischichtstärken ist. Darüberhinaus verschiebt sich beim Einpressen der Buchse in das Auge das Inennrohr in radialer Richtung zum Spalt hin mit der Wirkung, daß eine Versetzung der Buchsenachse gegenüber der Achse des Aufnahmeauges eintritt mit der Wirkung, daß mit einer solchen Buchse etwa bei Verwendung als Gelenkbuchse für eine Radführungslenker eine exakte Radführung nicht erzielt werden kann.

Ziel der vorliegenden Erfindung ist die Schaffung einer Gelenkbuchse der eingangs beschriebenen Art, die auf ihrem gesamten Umfang eine gleiche radiale Federkennung zeigt und mit deren Hilfe unabhängig von Zahl und Lage der Schlitze eine Deckung der Achse der eingebauten Buchse mit der Achse des Aufnahmeauges bzw. der Funktionsdrehachse gewährleistet wird.

Die Erfindung besteht darin daß der keil- bzw. bogenförmige Längsschlitz im Bereich der Gummischicht bzw. Gummischichten einen sich von den Buchsenstirnflächen zur Buchsenmittelebene hin verringernden Querschnitt besitzt, wobei der von den Rohrkanten eingeschlossene Spalt auf zumindest einem Teil seiner Länge eine der jeweils größten Breite des Längsschlitzes in Gummi an den jeweiligen Rohrkannten entsprechende Breite besitzt und diese Breite auf seiner Gesamtlänge nich unterschreitet.

Durch die Ausbildung der Gelenkbuchse in der erfindungsgemäßen Weise wird bewirkt, daß der Schlitz nach dem radialen Zusammendrücken der Buchse beim Einbau in das Auge zumindest im Bereich der Gummischichten vollständig geschlossen ist und in allen radialen Richtungen die gleiche Federkennung zeigt. Die Verjüngung der Querschnittsfläche der Schlitze in Richtung auf die Buchsenmittelebene kann hierbei mit der gleichen Wirkung durch Verringerung der Schlitzbreite und/oder der Schlitzhöhe herbeigeführt werden, so daß der Schlitz im Bereich des Gummis eine Keilförmige oder kegelig-trompetenförmige Kontur bebesitzt. Hierbei wird beim Aufbringen der radialen Druckvorspannung zum Zwecke des Einpressens der Buchse in das Aufnahmeauge die Gummischicht zusammengedrückt und aufgrund der Volumenbeständigkeit des Gummis nach den Seiten verdrängt. Die hierdurch hervorgerufene Querdehnung verdrängt den Gummi vor allem axial in Richtung auf die Stirnseiten der Buchse, da in dieser Richtung die Gummifläche—in der Abwicklung gesehenam schmalsten und entsprechend der Verformungswiderstand am kleinsten ist. Dies zeigt sich durch die starke Auswölbung des Gummis an den Stirnseiten der Buchse. Demgegenüber haben Versuche bestätigt, daß sich der Längsspalt bei den bekannten Buchsen beim Einpressen in das Aufnahmeauge wegen der in diesem Falle nur geringen Querdehnung in Umfangsrichtung nich vollständig schließt, so daß sich im Bereich des Längsspaltes nur eine kleine, bei breiten Längsspalten sogar bis auf den Wert O abfallende radiale Druckvorspannung aufbaut. Entsprechend ist auch der radiale Federkennwert der eingebauten Buchse in Richtung zum Spalt hin kleiner als in den anderen radialen Richtungen. Der Druckspannungsverlauf hat in diesen fällen über der Buchsenlänge gesehen etwa parabolische Form derart, daß die Druckspannung in der dem Spalt gegenüberliegenden axialen Radialebene den höchsten Wert besitzt und bis zur Spaltebene—gegebenenfalls bis auf den Wert O—abfällt. Demgegenüber schließt sich bei der erfindungsgemäß ausgebildeten Buchse der Schlitz im mittleren Buchsenbereich, also dort, wo die größte Druckspannung auftritt, infolge des in diesem Bereich verringerten Schlitzquerschnittes bereits zu Beginn der Verformung unter entsprechend Druckaufbau in voller Größe, während in den für die Aufnahme von Druckspannungen weniger bedeutsamen Bereichen in Nachbarschaft der Buchsenstirnflächen die dort sich zunehmend vergrößernden Schlitzquerschnitte erst danach durch das verdrängte Gummivolumen ausgefüllt werden. Die Buchse besitzt somit nach dem Einbau in allen Radialrichtungen die gleiche Federkonstante bzw. Federkennung, wobei eine radiale Verdrängung des Innenrohres und entsprechend radiale Versetzung der Rohrachse in eine exzentrische Lage vermieden ist. Ein zusätzlicher fertigungstechnischer Aufwand in Bezug auf die Vulkanisierform oder die Metallteile gegenüber den bekannten Buchsen ist nicht erforderlich.

In einer vorteilhaften Ausführungsform der Erfindung sind an Stelle eines durchgehenden Schlitzes von den beiden Buchsenstirnflächen ausgehende Längsschlitze in derselben Axialebene vorgesehen, die sich etwa jeweils über ein Drittel der Buchsenlänge erstrecken. Durch des Belassen des Gummikörpers in ungeschlitzter Form im Mittelbereich der Buchse wird eine Querdehnung in Umfangsrichtung in diesem Bereich völlig verhindert und damit die gleiche radiale Druckspannung und die gleiche radiale Federkonstante wie in allen anderen radialen Richtungen erreicht. Diese Ausführungsform eignet sich insbesondere für axial kurze Buchsen mit dicker Gummischicht, bei denen durch radiales Zusammenziehen nur ein geringerer Druckaufbau möglich ist.

In einer weiteren Ausführungsform kann das Außenrohr mit einem Spalt versehen sein, der im Bereich der Buchsenstirnflächen eine der größten Schlitzbreite im Gummi am Innenrohr spalt entsprechende Breite besitzt und sich zur Mitte der Buchse hin erweitert. Hierdurch werden eine gleichmäßigere Verteilung der Druckspannungen im Gummi erzielt und der Aufbau unerwünschter Spannungsanhäufungen im Bereich der Hafträder am äußeren Metall vermieden. Andererseits werden die infolge des axial nach außen verdrängten Gummis in Richtung auf die Stirnflächen auftretenden hohen Schubspannungen durch die Haftung des Gummis an den dort vorspringenden Blechrändern aufgenommen.

In einer weiteren, vorteilhaften Ausführungsform kann außer dem Außenrohr und ggf. dem Zwischenrohr auch das Innenrohr aus dünnem, gerolltem Blech bestehen und in derselben radialen Längsebene wie das Außen- bzw. Zwischenrohr mit einem Spalt versehen sein, der entweder auf seiner Gesamtlänge gleiche Breite besitzen kann oder an den Buchsenstirnflächen eine der Schlitzbreite im Gummi entsprechende Breite besitzt und sich in Richtung zu der Buchsenmittelebene hin erweitert. Auf diese Weise wird dei Montage der Buchse auf der Innenwelle wesentlich erleichtert dadurch, daß in den Fällen, in denen die Welle mit einem Bund oder Anschlag versehen ist, ein Aufweiten der Buchse und Überschieben über den Bund ermöglicht wird.

In einer Abwandlung der vorstehend beschriebenen Ausführungsform können das Außen- und das Innenrohr sowie gegebenenfalls das Zwischenrohr jeweils mit einem weiteren Längsspalt und der Gummi im Bereich der Rohrlängsspalte einseitig oder beidseitig mit zur Buchsenmitte hin flacher werdenden Ausnehmungen versehen sein, die einen durchgehenden Steg in der Gummischicht belassen. Die Buchse besteht in diesem Falle aus zwei entlang einer Irrennlinie gelenkig verbundenen Halbschalen. Es wird auf diese Weise die Montage weiterhin vereinfacht dadurch, daß das Aufbiegen der Schalenhälften im Bereich des Gummisteges und damit Aufbringen auf die Innenwelle wesentlich erleichtert wird. In Fortführung dieses Gedankens kann die Buchse durch vollständige Trennung im Bereich des Gummisteges unverbunden zweiteilig ausgebildet sein.

Zur Verbesserung des Gummidurchflusses beim Vulkanisieren kann des gerollte Außenrohr mit einer beliebigen Anzahl von Mantellöchern versehen sein.

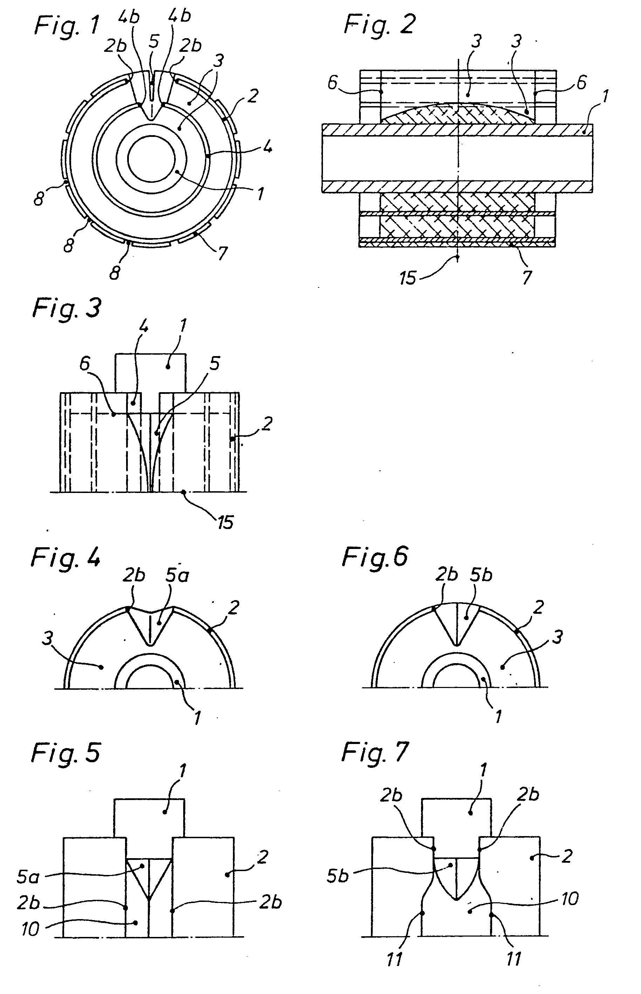

Die Erfindung ist in der Zeichnung beispielsweise ceranschaulicht. Es zeigen
Fig. 1 die Sicht auf eine erfindungsgemäße Buchse von einer Stirnfläche her
Fig. 2 einen Längsschnitt durch die Buchse nach Fig. 1
Fig. 3 eine Teilsicht von oben auf Fig. 1
Fig. 4 eine der Fig. 1 entsprechende Sicht auf eine andere Ausführungsform einer Buchse
Fig. 5 eine Sicht von oben auf Fig. 4
Fig. 6 eine der Fig. 1 entsprechende Sicht auf eine weitere Ausführungsform einer Gelenkbuchse
Fig. 7 eine Sicht von oben auf Fig. 6
Fig. 8 die in den Fig. 6 und 7 dargestellte Buchse in stirnseitiger Einbauansicht
Fig. 9 einen Längsschnitt durch die in Fig. 8 wiedergegebene Buchse
Fig. 10 eine Sicht von oben auf Fig. 8
Fig. 11 eine Halbschale einer zweiteilig ausgebildeten Gelenkbuchse in perspektivischer Darstellung
Fig. 12 eine Stirnflächenansicht einer weiteren Ausführungsform einer Gelenkbuchse vor der Montage
Fig. 13 eine Sicht von links auf Fig. 12
Die in der Zeichnung wiedergegebenen Gelenkbuchsen bestehen aus einem Innenrohr 1, einem Außenrohr 2 und im Falle der in Fig. 1 wiedergegebenen Ausführungsform zusätzlich einem Zwischenrohr 4, zwischen die jeweils eine Gummischicht bzw. Gummischichten 3 einvulkanisiert ist. Die Gelenkbuchsen weisen vor ihrem Einbringen in das Aufnahmeauge, d.h. in ungespanntem Zustand einen das—nicht wiedergegebene—Aufnahmeauge übersteigenden Außendurchmesser sowie entlang einer Mantellinie in der Gummischicht einen Längsschlitz auf, wobei entsprechend zwischen den Kanten 2b bzw. 4b des Außenrohres 2bzw. Zwischenrohres 4 Spalte begrenzt werden. Das Außenrohr 2 ist auf seiner Außenfläche mit einer dünnen, von Längsnuten 8 unterbrochenen Gummischicht 7 belegt, die den Reibungskoeffizienten erhöht und damit einen einwandfreien kraftschlüssigen Sitz der Gelenkbuchse in dem Aufnahmeauge sichert.

Die Längsschlitze 5 besitzen einen sich von den Buchsenstirnflächen 6 zur Buchsenmittelebene hin verringernden Querschnitt, wobei die von den Kanten 2b, 4b der Rohre 2, 4 (Fig. 1) eingeschlossenen Spalte auf zumindest einem Teil ihrer Länge eine Breitè besitzen, die der größten Breite des Schlitzes 5 in der jeweiligen Ebene entspricht, wobei diese Blechspaltbreiten auf der gesamten Länge der Buchsen nicht unterschritten werden. Im Falle der in den Fig. 1 bis 3 wiedergegebenen Ausführungsform ist eine durchgehender, d.h. sich über die gesamte Buchsenlänge erstreckender Schlitz 5 einersiehe insbesondere Fig. 1 und 3—sich von der Stirnfläche 6 bis zur Buchsenmittelebene 15 hin kontinuierlich verringernden Breite und Höhe vorgesehen, so daß er im Bereich der Mittelebene einen kleinen, sich in Richtung zu den beidseitigen Stirnflächen zunehmend erweiternden Querschnitt besitzt. Der zwischen den Begrenzungskanten 2b des Außenrohres 2 begrenzte Blechspalt weist im Falle dieser Ausführungsform auf seiner gesamten Länge eine gleichbleibende, der größten Breite des Schlitzes 5 entsprechende Breite auf. Entsprechend besitzt der zwischen den Begrenzungskanten 4b des Zwischenrohres 4 begrenzte Spalt auf seiner gesamten Länge gleichbleibende Breite, die der maximalen Breite des Schlitzes 5 in dieser radialen Umfangsebene entspricht.

Bei der in den Fig. 4 und 5 wiedergegebenen Ausführungsform einer Gelenkbuchse ohne Zwischenrohr ist im Gummikörper 3 ein Längsschlitz 5a vorgesehen, der durchgehend auf der gesamten Länge eine gleiche Breite, und eine sich von beiden Seiten zur Buchsenmittelebene hin verringernde Tiefe besitzt, wobei das Außenrohr 2 in einer der Ausführungsform nach Fig. 1 bis 3 entsprechenden Weise einen Spalt durchgehend gleicher Breite aufweist. Auch bei dieser Ausführungsform ergibt sich im Gummikörper ein durchgehender Schlitz, der allerdings infolge der durchgehenden Breitengleichheit bei gleichzeitiger Verflachung zur Buchsenmittelebene hin nicht wie im Falle der in Fig. 1 bis 3 in einer spaltartigen Schlitzung im Mittelbereich sondern—siehe Fig. 4—in Form einer Flachkerbung in Erscheinung tritt.

Bei der in Fig. 6 und 7 widergegebenen Ausführungsform ist ein unterbrochener Schlitz vorgesehen derart, daß zwei sich von den beiden Stirnflächen über etwa ein Drittel der Buchsenlänge erstreckende Schlitze 5b vorgesehen sind, während der Mittelteil 10 des Gummikörpers ungeschlitzt erhalten bleibt. Im falle dieser Ausführungsform weist darüberhinaus der zwischen den Rohrkanten des Rohres 2 eingeschlossene Spalt in den randnahen Bereichen 2b eine der Breite des Schlitzes 5b entsprechende Breite auf, während er in dem den Mittelteil 10 des Gummikörpers einschließenden Bereich 11 eine größere Breite aufweist. Ein Außenrohr mit einer derartigen Spaltausbildung kann selbstverständlich auch bei den in den Fig. 1 bis 5 wiedergegebenen Ausführungs formen einer Buchse un umgekehrt angewendet werden.

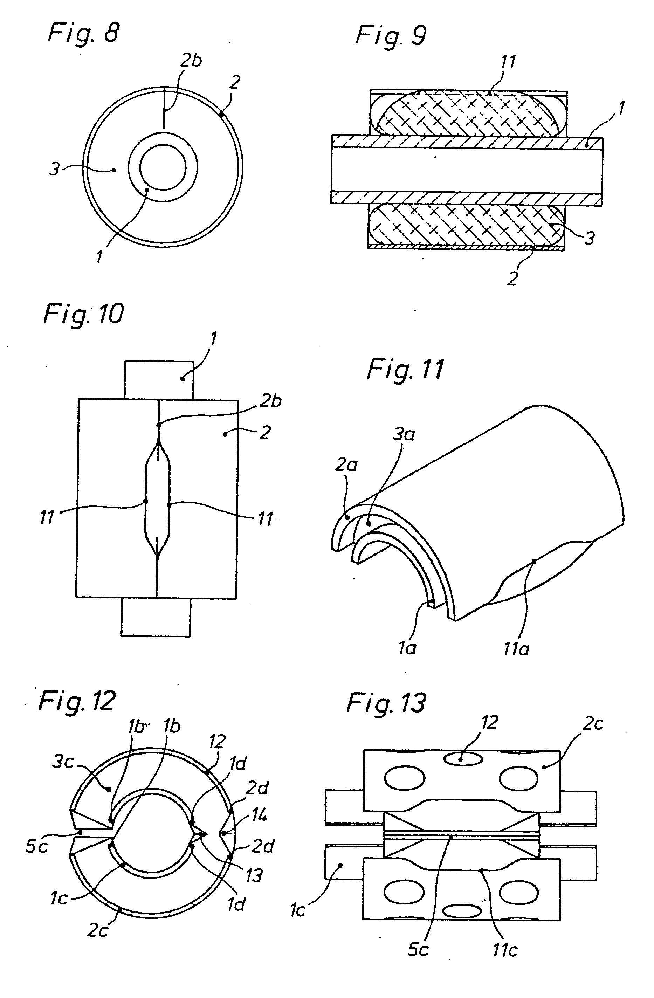

In den Fig. 8 bis 10 ist die in den Fig. 6 und 7 in ungespanntem Zustand wiedergegebene Gelenkbuchse nach Aufbringung der Vorspannung zum Zwecke der Montage im Aufnahmeauge wiedergegeben. In dieser Lage liegen die Spaltkanten 2b des Außenrohres 2 in den äußeren, stirnflächennahen Bereichen bündig aneinander an, während im Innenbereich zwischen den aufspringenden Spaltkanten 11—siehe Fig. 10—eine Öffnung verbleibt.

In den Fig. 12 und 13 ist eine weitere Ausführungsform einer erfindungsgemäßen Gelenkbuchse vorgesehen. In diesem Falle ist außer im Außenrohr 2c auch im Innenrohr 1c ein von den Kanten 1b begrentzter durchgehender Längsspalt vorgesehen, wobei sich weiterhin der im Gummi ausgebildete Schlitz 5c durch die gesamte Gummischicht hindurch erstreckt, so daß die Buchse in einer Längsebene vollständig geöffnet ist. Hierbei besitzt der Schlitz 5c in axialer Richtung von den Stirnflächen zur Buchsenmitte hin eine sich verengende Kontur. Bereits bei einer in dieser Weise einseitig durchgeschlitzten Ausführungsform wird die Montage auf einer Innenwelle wesentlich erleichtert.

Es kann darüberhinaus in der in Fig. 12 wiedergegebenen Weise auf der gegenüberliegenden Seite der Buchse sowohl das Innenrohr 1c als auch das Außenrohr 2c mit jeweils einem Spalt 1d, 2d versehen sein, wobei die Gummischicht in diesen Spaltbereichen jeweils mit in Längsrichtung durchgehenden, zur Buchsenmitte hin flacher werdenden Vertiefungen bzw. Einkerbungen 13 bzw. 14 versehen ist. Die Gelenkbuchse ist daher in zwei Halbschalen geteilt, wobei der verbleibende Gummi-Restquerschnitt zwischen den Vertiefungen 13 und 14 die beiden Schalenhälften verbindet, die zum Einbringen der Innenwelle leicht gelenkig aufgeklappt und anschließend um die Welle herum wieder geschlossem werden können. In weiterer Fortführung des Erfindungsgedankens insoweit können die beiden Halbschalen in etwa der in Fig. 11 wiedergegebenen Weise durch Teilung der Gummischicht im Bereich der Ebene zwischen den Einkerbungen 13 und 14 (Fig. 12) vollständig getrennt sein, wobei der im Außenrohr 2c ausgebildete Spalt 2d entweder parallelkantig oder in der in den Fig. 11 bzw. 13 wiedergegebenen Weise im Innenbereich mit Aufweitungen 11a bzw. 11c versehen sein können.

Bei der in Fig. 13 wiedergegebenen Ausführungsform sind im Außenrohr Löcher 12 vorgesehen, die den Gummidurchfluß beim Vulkanisieren erleichtern.

**Patentansprüche**

1. Gelenkbuchse zur Aufnahme in einem Aufnahmeauge, bestehend aus einem Außenrohr (2) und einem Innenrohr (1) sowie gegebenenfalls einem Zwischenrohr (4) mit jeweils einer zwischen den Rohren einvulkanisierten Gummischicht (3), die in unmontiertem Zustand einen das Aufnahmeauge übersteigenden Außendurchmesser aufweist und mindestens einen sich in radialer Richtung bis zum Innenrohr erstreckenden im einem radialen Querschnitt im wesentlichen keil- oder bogenförmigen Längsschlitz (5) besitzt, dadurch gekennzeichnet, daß der keil- bzw. bogenförmige Längsschlitz (5) im Bereich der Gummischicht (3) bzw. Gummischichten einen sich von den Buchsenstirnflächen (6) zur Buchsenmittelebene (15) hin verringernden Querschnitt besitzt, wobei der von den Rohrkanten (2b, 4b) eingeschlossene Spalt 11 auf zumindest einem Teil seiner Länge einer der jeweils größten Breite des Längsschlitzes (5) im Gummi an den jeweiligen Rohrkannten (2b,4b) entsprechende Breite besitzt und diese Breite auf seiner gesamten Länge nich unterschreitet.

2. Gelenkbuchse nach Anspruch 1, dadurch gekennzeichnet, daß in derselben Axialebene von den beiden Buchsenstirnflächen (6) ausgehende, sich nur über eine Teillänge der Buchsengesamtlänge erstreckende Langsschlitze (5a, 5b) vorgesehen sind.

3. Gelenkbuchse nach einem der Ansprüche 1 oder 2, dadurch gekennzeichnet, daß der im Außenrohr ausgebildete Spalt (2b, 11) im Bereich der Buchsenstirnflächen (6) eine der größten Schlitzbreite im Gummi entsprechende Breite besitzt und sich in Richtung auf die Mittelebene (15) erweitert.

4. Gelenkbuchse nach einem der Ansprüche 1 bis 3, dadurch gekennzeichnet, daß das Innenrohr (1) in derselben Axialebene wie der Außenrohrspalt (2b) einen Spalt (1b) aufweist.

5. Gelenkbuchse nach Anspruch 4, dadurch gekennzeichnet, daß der Innenrohrspalt (1b) im Bereich der Buchsenstirnflächen (6) eine der größten Schlitzbreite im Gummi am Innenrohrspalt entsprechende Breite besitzt und sich in Richtung auf die Mittelebene (15) erweitert.

6. Gelenkbuchse nach Anspruch 4, dadurch gekennzeichnet, daß sich der Schlitz (5c) durch die gesamte Gummischicht (3c) hindurch erstreckt und sich von den Buchsenstirnflächen (6) in Richtung auf die Buchsenmittelebene (15) verengt.

7. Gelenkbuchse nach einem der Ansprüche 1 bis 6, dadurch gekennzeichnet, daß die Rohre (1c, 2c) mit jeweils einem weiteren Spalt (1d, 2d) und die Gummischicht (3c) im Bereich der Spalte (1d, 2d) mit einer oder mehreren Schlitzungen (13, 14) versehen sind.

8. Gelenkbuchse nach Anspruch 7, dadurch gekennzeichnet, daß die Schlitzungen (13, 14) eine sich von den Stirnflächen (6) zur Mittelebene hin verjüngende Form besitzen.

9. Gelenkbuchse nach einem der Ansprüche 6 bis 8, dadurch gekennzeichnet, daß die Buchse zur Bildung von zwei Buchsenhalbschalen in der Ebene der Schlitzungen (13, 14) geteilt ist.

10. Gelenkbuchse nach einem der Ansprüche 1 bis 9, dadurch gekennzeichnet, daß das Außenrohr (2c) mit Löchern (12) versehen ist.

**Revendications**

1. Joint à douille pour être reçu dans un oeil récepteur, constitué d'un tube extérieur (2) et d'un tube intérieur (1) ainsi que, éventuellement, d'un tube intermédiaire (4) avec chaque fois une couche de caoutchouc (3) vulcanisée entre les tubes, qui, dans l'état où elle n'est pas montée, présente un diamètre extérieur dépassant l'oeil récepteur et possède au moins une fente longitudinale (5) s'étendant en direction radiale jusqu'au tube intérieur, ayant dans une section transversale radiale une forme en principe d'arc ou de coin, caractérisé en ce que la fente longitudinale (5) en forme de coin ou d'arc possède dans la région de la couche, respectivement des couches, de caoutchouc (3) une section transversale allant en se rétrécissant des surfaces frontales (6) de la douille au plan médian (15) de la douille, l'intervalle (11) compris entre les tranches (2b,4b) des tubes possédant sur au moins une partie de sa longueur, une largeur correspondant à chaque fois la plus grande largeur de la fente longitudinale (5) dans le caoutchouc aux tranches des tubes (2b,4b) chaque fois, et n'étant pas inférieure à cette largeur sur toute sa longueur.

2. Joint à douille suivant la revendication 1, caractérisé en ce que dans le même plan axial, partant des deux surfaces frontales (6) de la douille, sont prévues des fentes longitudinales (5a,5b) s'étendant seulement sur une longueur partielle de la longueur totale de la douille.

3. Joint à douille suivant une des revendications 1 ou 2, caractérisé en ce que l'intervalle (2b,11) formé dans le tube extérieur possède dans la région des surfaces frontales (6) de la douille une largeur correspondant à la plus grande largeur de fente dans le caoutchouc et s'élargit en direction du plan médian (15).

4. Joint à douille suivant une des revendications 1 à 3, caractérisé en ce que le tube intérieur (1) présente un intervalle (1b) dans le même plan axial que l'intervalle (2b) du tube extérieur.

5. Joint à douille suivant la revendication 4, caractérisé en ce que l'intervalle (1b) du tube intérieur possède dans la région des surfaces frontales (6) de la douille une largeur correspondant à la plus grande largeur de fente dans le caoutchouc à la fente du tube intérieur et s'élargit en direction du plan médian (15).

6. Joint à douille suivant la revendication 4, caractérisé en ce que la fente (5c) s'étend à travers toute la couche de caoutchouc (3c) et se rétrécit à partir des surfaces frontales (6) de la douille en direction du plan médian (15) de la douille.

7. Joint à douille suivant une des revendications 1 à 6, caractérisé en ce que les tubes (1c,2c) sont pourvus de chaque fois un autre intervalle (1d,2d) et en ce que la couche de caoutchouc (3c) est munie dans la région des intervalles (1d,2d) d'une ou de plusieurs entailles (13,14).

8. Joint à douille suivant la revendication 7, caractérisé en ce que les entailles (13,14) ont une forme qui va en se rétrécissant des faces frontales (6) au plan médian.

9. Joint à douille suivant une des revendications 6 à 8, caractérisé en ce que la douille est divisée pour la formation de deux demi-coques de douille dans le plan des entailles (13,14).

10. Joint à douille suivant une des revendications 1 à 9, caractérisé en ce que le tube extérieur (2c) est pourvu de trous (12).

**Claims**

1. A pivot bushing for accommodation in an accommodating aperture, comprising an outer tube (2) and an inner tube (1), and possibly an intermediate tube (4), with a rubber layer (3) vulcanized in between each of the tubes, the rubber layer (3) having, in the unassembled state, an external diameter which exceeds the accommodating aperture and having at least one longitudinal slot (5) which extends in a radial direction towards the inner tube and which is substantially wedge-shaped or curved in a radial cross-section, characterised in that the wedge-shaped or curved longitudinal slot (5) has, in the region of the rubber layer or layers (3), a cross-section which reduces in size from the bush ends (6) towards the central plane (15) of the bush, whereby the gap (11) defined by the tube edges (2b, 4b) has, over at least a portion of its length, a width which corresponds to the maximum available width of the longitudinal slot (5) in the rubber at each respective tube edge (2b, 4b), and the gap (11) does not diminish below this width throughout its entire length.

2. A pivot bushing according to claim 1, characterised in that longitudinal slots (5a, 5b) are provided which extend from the two bush ends (6) in the same axial plane and which extend only over a portion of the overall length of the bush.

3. A pivot bushing according to one of claims 1 or 2, characterised in that the gap (2b, 11) formed in the outer tube has, in the region of the bush ends (6), a width corresponding to the maximum slot width in the rubber, and the gap widens in the direction of the central plane (15).

4. A pivot bushing according to one of claims 1 to 3, characterised in that the inner tube (1) has a gap (1b) in the same axial plane as the outer tube gap (2b).

5. A pivot bushing according to claim 4, characterised in that the inner tube gap (1b) has, in the region of the bush ends (6), a width corresponding to the maximum slot width in the rubber at the inner tube gap, and the gap widens in the direction of the central plane (15).

6. A pivot bushing according to claim 4, characterised in that the slot (5c) extends through the entire rubber layer (3c) and narrows from the bush ends (6) towards the central plane (15) of the bush.

7. A pivot bushing according to one of claims 1 to 6, characterised in that the tubes (1c, 2c) are each provided with a further gap (1d, 2d), and the rubber layer (3c) in the region of the gaps (1d, 2d) is provided with one or more slots (13, 14).

8. A pivot bushing according to claim 7, characterised in that the slots (13,14) taper from the ends (6) towards the central plane.

9. A pivot bushing according to one of claims 6 to 8, characterised in that the bush is divided so as to form two bush halves in the plane of the slots (13, 14).

10. A pivot bushing according to one of claims 1 to 9, characterised in that the outer tube (2c) is provided with apertures (12).

Fig. 1

Fig. 2

Fig. 3

Fig. 4

Fig. 6

Fig. 5

Fig. 7

*Fig. 8*

*Fig. 9*

*Fig. 10*

*Fig. 11*

*Fig. 12*

*Fig. 13*